(19) Europäisches Patentamt

European Patent Office

Office européen des brevets

(11) **EP 1 657 911 A2**

(12) **EUROPEAN PATENT APPLICATION**

(43) Date of publication:
**17.05.2006 Bulletin 2006/20**

(51) Int Cl.:
**H04N 3/15** *(2006.01)*

(21) Application number: **05256740.1**

(22) Date of filing: **31.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.11.2004  US 986616**

(71) Applicant: **OmniVision Technologies, Inc.
Sunnyvale,
California 94089 (US)**

(72) Inventor: **He, Xinping
Sunnyvale,
California 94089 (US)**

(74) Representative: **Hackney, Nigel John et al
Mewburn Ellis LLP
York House,
23 Kingsway
London WC2B 6HP (GB)**

(54) **Image sensor and pixel that has switchable capacitance at the floating node**

(57)    A pixel and image sensor formed in accordance with the present invention has two modes of operation: a high illumination mode and a low illumination mode. The present invention switches on an auxiliary capacitance at the floating node based upon the amount of illumination on the image sensor. The amount of illumination on the image sensor can be determined in a variety of ways. Once the level of illumination is determined, a decision is made by comparing the level of illumination to a threshold whether to switch on the auxiliary capacitance (for high illumination) or not switch on the auxiliary capacitance (for low illumination).

# FIGURE 2

**Description**

The present invention relates to image sensors, and more particularly, to an image sensor that uses pixels that can vary their capacitance based upon the intensity of incident light.

Image sensors have become ubiquitous. They are widely used in digital still cameras, cellular phones, security cameras, medical, automobiles, and other applications. The technology used to manufacture image sensors, and in particular CMOS image sensors, has continued to advance at great pace. For example, the demands of higher resolution and lower power consumption have encouraged the further miniaturization and integration of the image sensor.

As the pixels become smaller, it becomes more difficult for the pixel to output a signal of adequate strength that can be easily deciphered by downstream signal processing. Moreover, there are demands on the image sensor to perform over a large range of lighting conditions, varying from low light conditions to bright outside sunlight. This is generally referred to as having a large dynamic range. Still, because of the decreasing size of the pixel, as described below, the dynamic range of the pixel may be limited.

According to various aspects, the present invention provides an active pixel according to Claim 1 or Claim 10 and the method of operating a pixel according to Claim 16 or Claim 19 and a CMOS image sensor according to Claim 22.

BRIEF DESCRIPTION OF THE DRAWINGS

Figure 1 is a schematic diagram of a prior art four transistor (4T) active pixel.

Figure 2 is a schematic diagram of a four transistor (4T) active pixel formed in accordance with the present invention.

Figure 3 is a flow diagram illustrating the method of operation of the 4T active pixel of Figure 2.

Figure 4 shows an image sensor formed using the active pixels and methods of the present invention.

DETAILED DESCRIPTION

In the following description, numerous specific details are provided to provide a thorough understanding of embodiments of the invention. One skilled in the relevant art will recognize, however, that the invention can be practiced without one or more of the specific details, or with other methods, components, materials, etc. In other instances, well known structures, materials, or operations are not shown or described in order to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrase "in one embodiment" or "in an embodiment" in various places throughout the specification are not necessarily all referring to the same embodiment. Furthermore, the particular features, structures, or characteristics may be combined in any suitable manner in one or more embodiments.

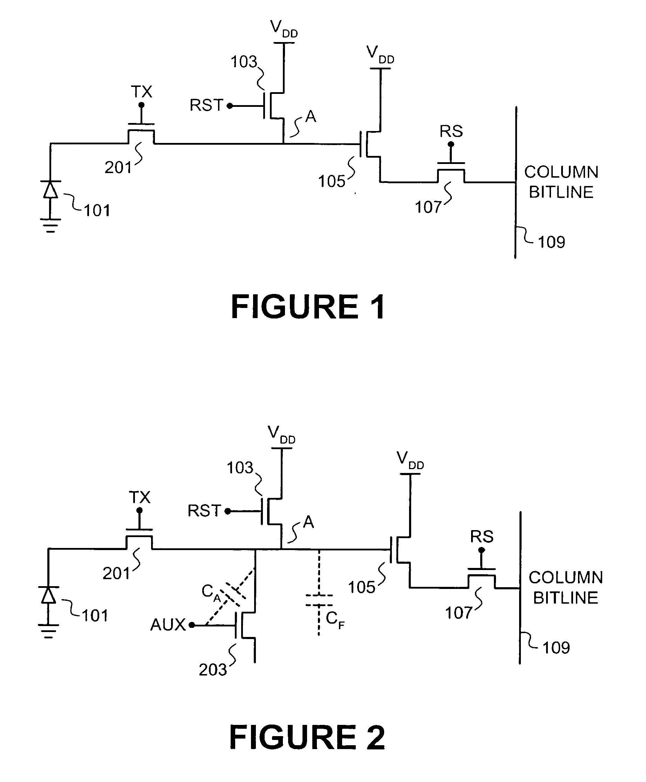

Figure 1 illustrates a CMOS active pixel that uses four transistors. This is known in the art as a 4T active pixel. A light sensing element 101 outputs a signal that is used to modulate an amplification transistor 105. The light-sensing element 101 can be one of a variety of devices, including without limitation, photogates, photodiodes, pinned photodiodes, partially pinned photodiodes, etc. A transfer transistor 201 is used to transfer the signal output by the light-sensing element 101 to a floating node A, which is connected to the gate of the amplification transistor 105 (also known as a source-follower transistor).

In operation, during an integration period (also referred to as an exposure period), the light sensing element 101 generates charge which is held at the light sensing element 101 because transfer transistor 201 is off. After the integration period, the transfer transistor 201 is turned on to transfer the signal to the floating node A. After the signal has been transferred to floating node A, the transfer transistor 201 is turned off again for the start of a subsequent integration period. Thus, as seen, the transfer transistor 201 turns on and off periodically to transfer signal from each integration period to the floating node A.

The signal on the floating node A is then used to modulate the amplification transistor 105. Finally, a row select transistor 107 is used as a means to address the pixel and to selectively read out the signal onto a column bit line 109. After readout through the column bitline 109, the reset transistor 103 resets the floating node A to a reference voltage, in this particular embodiment, $V_{dd}$.

In general, in the 4T pixel design, the floating node A is designed to be relatively small. Floating node A is designed to be relatively small in order to achieve high transfer or conversion gain. However, in high illumination conditions, the amount of charge (signal) produced by the light-sensing element 101 may be greater than the capacity of the floating node A. This will result in saturation of the floating node A and reduced dynamic range, as well as reduced signal-to-noise ratio (SNR).

Turning to Figure 2, a 4T active pixel formed in accordance with the present invention is shown. The present invention allows the floating node A in a 4T active pixel to have a variable capacitance. This is accomplished by having one or more "auxiliary" capacitors attached to the floating node A. As seen in Figure 2, the auxiliary capacitor, in one embodiment, is formed by a transistor 203. When the auxiliary transistor 203 is turned "on" by having signal AUX high, the transistor 203 becomes a MOS capacitor with a relatively high capacitance ($C_A$) compared to the capacitance $C_F$ of the floating node A. When the auxiliary transistor 203 is turned "off" by having signal AUX low, the transistor 203 still has a relatively low parasitic capacitance ($C_A$). The suitable size of the auxiliary transistor 203 is best determined by various design parameters, device characteristics, process parameters, and the end market for the image sensor. Further, although the supplemental capacitance is supplied in this embodiment by a transistor 203 operating as a MOS capacitor, other types of switchable capacitances are also within the scope of the present invention.

Under high illumination light conditions, the auxiliary transistor 203 is turned on during the readout operation. This, in effect, increases the capacitance of the floating node A. However, in low-light conditions, the auxiliary transistor 203 is turned off and the floating node A maintains its relatively small capacitance.

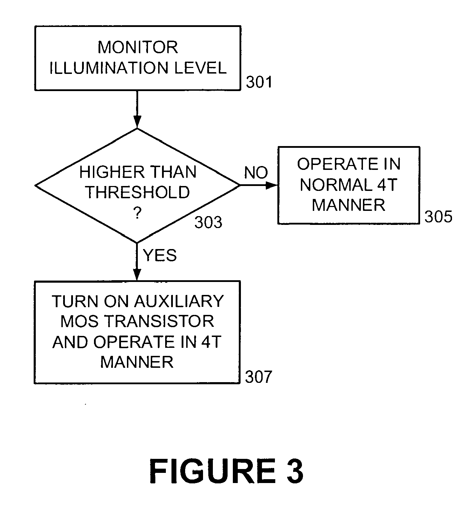

Turning to Figure 3, a flow diagram showing a method of the present invention is provided. First, at box 301, the illumination level incident to the image sensor (and thus pixels) is monitored. This can be done in any number of conventional ways. For example, the output from the image sensor can be examined for its brightness level. As can be appreciated of ordinary skill in the art, nearly every image sensor has circuitry for automatic gain control and exposure control. By determining the strength of the signal output from the pixels, the ambient light level can be determined. Alternatively, the processed output from the image sensor can be examined to determine the relative ambient lighting conditions. Still alternatively, a dedicated light-sensitive device outside of the imaging area of the image sensor can be used to monitor the amount of incident light onto the image sensor.

Next, at box 303, the illumination level determined at box 301 is compared to a threshold value. The threshold value is the trigger for turning on the auxiliary transistor 203. The precise point where the threshold is set may be made variable depending upon design considerations, parameters, and characteristics of the image sensor, and may even be adjustable at the discretion of the user of the image sensor.

If the illumination level determined at box 301 is higher than the threshold, then at box 307, the auxiliary transistor 203 is turned on during operation. However, if the illumination level is lower than the threshold, then at box 305, the auxiliary transistor 203 is turned off.

In a 4T pixel, in order to obtain high transfer gain, the floating node A is designed to be relatively small and have a relatively small capacitance, for example, on the order of 2 femtofarads. If the image sensor and pixels use a one-volt signal range, this means that the maximum number of electrons ($Q_{max}$) that can be held at the floating node A is about 12,500. Considering "shot noise," this results in a maximum signal-to-noise ratio of 112. However, in many illumination conditions, a light-sensing element, such as a pinned photodiode, may generate more signal (electrons) than $Q_{max}$.

In order to address this issue, in accordance with the present invention, an auxiliary capacitance (in this embodiment the auxiliary transistor 203) is switched on during operation where there is relatively high ambient illumination. This results in the capacitance on the floating node A to increase, i.e., the sum of the "4T normal" floating node (2 femtofarads) and the capacitance provided by the auxiliary transistor 201.

Returning to Figure 2, the total capacitance of the floating node is $C_F$ and $C_V$, where $C_F$ is the capacitance of the floating node and $C_V$ is the capacitance of the auxiliary transistor 203. When the auxiliary transistor 203 is off, i.e. AUX = 0 volts, then $C_V$ is merely the parasitic capacitance (referred to as $C_{V1}$) between the gate and drain of the auxiliary transistor 203. When the auxiliary transistor 203 is on, i.e. AUX = $V_{dd}$ volts, then $C_V$ is the MOS capacitance (referred to as $C_{V2}$) of the auxiliary transistor 203.

Assuming that the amount of charge collected by the light sensing element 101 is Q and the auxiliary transistor 203 is off, then the voltage change ($\Delta V_1$) at floating node A is given by:

$$\Delta V_1 = Q/(C_{V1} + C_F)$$

Similarly, assuming that the amount of charge collected by the light sensing element 101 is Q and the auxiliary transistor 203 is on, then the voltage change ($\Delta V_2$) at floating node A is given by:

$$\Delta V_2 = Q/(C_{V2} + C_F)$$

Thus, for example, if $C_{V1}$ is approximately equal to $0.1C_F$ and $C_{V2}$ is approximately equal to $1.2C_F$, then $\Delta V_1 = Q/1.1C_F$ and $\Delta V_2 = Q/2.2C_F$. It can be seen that the voltage change (conversion gain) is about twice as high when the auxiliary transistor 203 is turned off then when the auxiliary transistor 203 is turned on. In other words, during low light conditions, there is higher conversion gain.

Note that in Figure 2, only a single auxiliary transistor 203 is present. However in other embodiments, multiple auxiliary transistors in parallel or in series may be used to have gradations in controlling the capacitance of the floating node A and thus the conversion gain. Instead of having only "high illumination" and "low illumination" modes, any number of intermediate conversion gains can be obtained by appropriately controlling the cascade of auxiliary transistors.

In the above description, the capacitance of the floating node A is increased upon detection of a high level of illumination. The converse arrangement may also be implemented. In other words, in yet another alternative embodiment, "normal" operation may have the capacitance at floating node A be relatively high. When there is detection of a low level of illumination, the capacitance at floating node A may be decreased to improve conversion gain. This decrease may be done be turning off the auxiliary capacitance. These embodiments are considered equivalent since the same function, manner, and result is accomplished.

Thus, as seen from the description above, a pixel and image sensor formed in accordance with the present invention has two modes of operation: a high illumination mode and a low illumination mode. The present invention switches on an auxiliary capacitance at the floating node based upon the amount of illumination on the image sensor. The amount of illumination on the image sensor can be determined in a variety of ways, and any method for determining the level of illumination could easily be applied to the present invention. Once the level of illumination is determined, a decision is made by comparing the level of illumination to a threshold whether to switch on the auxiliary capacitance (for high illumination) or not switch on the auxiliary capacitance (for low illumination).

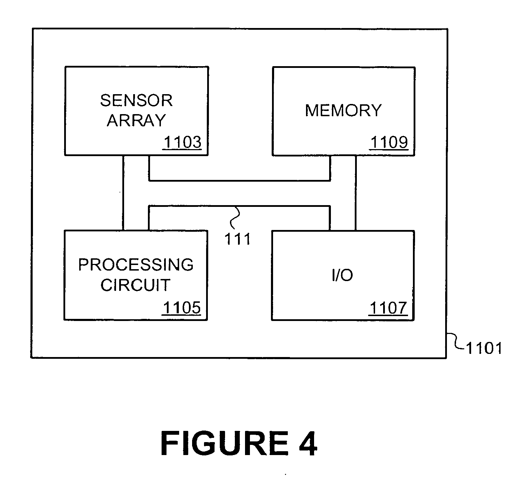

The active pixels described above may be used in a sensor array of a CMOS image sensor 1101. Specifically, Figure 4 shows a CMOS image sensor formed in accordance with the present invention. The CMOS image sensor includes a sensor array 1103, a processor circuit 1105, an input/output (I/O) 1107, memory 1109, and bus 1111. Preferably, each of these components is formed on a single silicon substrate and manufactured to be integrated onto a single chip using standard CMOS processes.

The sensor array 1103 portion may be, for example, substantially similar to the sensor arrays portions of image sensors manufactured by the assignee of the present invention, OmniVision Technologies, Inc., of Sunnyvale, CA, as model numbers OV561 0 or OV7640, except that the pixels are replaced with the active pixels disclosed herein.

The description of the invention in this application as set forth herein is illustrative and is not intended to limit the scope of the invention. Variations and modifications of the embodiments described herein are possible, and practical alternatives to, or equivalents of the various elements, the embodiments are known to those of ordinary skill in the art. These and other variations and modifications of the embodiments disclosed herein may be made without departing from the scope and spirit of the invention.

From the foregoing, it will be appreciated that specific embodiments of the invention have been described herein for purposes of illustration, but that various modifications may be made without deviating from the spirit and scope of the invention. Accordingly, the invention is not limited except as by the appended claims.

## Claims

1. An active pixel comprising:

   a light sensing element formed in a semiconductor substrate;
   a transfer transistor formed between said light sensing element and a floating node and selectively operative to transfer a signal from said light sensing element to said floating node;
   an auxiliary capacitance connected to said floating node, said auxiliary capacitance being enabled when a level of illumination is above a threshold; and
   an amplification transistor controlled by said floating node.

2. The pixel of Claim 1 wherein said light sensing element is selected from the group of photodiode, pinned photodiode, partially pinned photodiode, or photogate.

3. The pixel of Claim 1 further wherein if said level of illumination is below said threshold, said auxiliary capacitance is disabled.

4. The pixel of Claim 1 wherein said amplification transistor outputs an amplified version of said signal to a column bitline.

5. The pixel of Claim 1 further including a reset transistor operative to reset said floating node to a reference voltage.

6. The pixel of Claim I wherein said auxiliary capacitance is a transistor that can be enabled to operate as a MOS transistor.

7. The pixel of Claim 3 wherein said auxiliary capacitance is a transistor that can be enabled to operate as a MOS transistor.

8. The pixel of Claim 1 wherein said auxiliary capacitance is comprised of more than one discrete capacitance that can be selectively enabled and disabled based upon said level of illumination.

9. The pixel of Claim 1 wherein said auxiliary capacitance is comprised of more than one discrete transistors that can be selectively enabled and disabled based upon said level of illumination.

10. An active pixel comprising:

    a light sensing element formed in a semiconductor substrate;
    a transfer transistor formed between said light sensing element and a floating node and selectively operative to transfer a signal from said light sensing element to said floating node;

a capacitance connected to said floating node, said capacitance being disabled when a level of illumination is below a threshold; and

an amplification transistor controlled by said floating node.

11. The pixel of Claim 10 wherein said light sensing element is selected from the group of photodiode, pinned photodiode, partially pinned photodiode, or photogate.

12. The pixel of Claim 10 further wherein if said level of illumination is above said threshold, said capacitance is enabled.

13. The pixel of Claim 10 further including a reset transistor operative to reset said floating node to a reference voltage.

14. The pixel of Claim 10 wherein said capacitance is a transistor that can be selectively enabled and disabled.

15. The pixel of Claim 1 wherein said capacitance is comprised of more than one discrete capacitance that can be selectively enabled and disabled based upon said level of illumination.

16. A method of operating a pixel of an image sensor, said pixel including a light sensing element, a transfer transistor between said light sensing element, a floating node for transferring a signal from said light sensing element to said floating node, an auxiliary capacitance connected to said floating node, and an amplification transistor modulated by said signal on said floating node, the method comprising:

comparing a level of illumination to a threshold; and

if said level of illumination is greater than said threshold, increasing the capacitance at said floating node by enabling said auxiliary capacitance.

17. . The method of Claim 16 wherein said light sensing element is selected from the group of photodiode, pinned photodiode, partially pinned photodiode, or photogate.

18. The method of Claim 16 wherein said pixel further includes a reset transistor operative to reset said floating node to a reference voltage.

19. A method of operating a pixel of an image sensor, said pixel including a light sensing element, a transfer transistor between said light sensing element, a floating node for transferring a signal from said light sensing element to said floating node, a capacitance connected to said floating node, and an amplification transistor modulated by said signal on said floating node, the method comprising:

comparing a level of illumination to a threshold; and

if said level of illumination is less than said threshold, decreasing the capacitance at said floating node by disabling said capacitance.

20. The method of Claim 19 wherein said light sensing element is selected from the group of photodiode, pinned photodiode, partially pinned photodiode, or photogate.

21. The method of Claim 19 wherein said pixel further includes a reset transistor operative to reset said floating node to a reference voltage.

22. A CMOS image sensor comprising:

a plurality of active pixels arranged in rows and columns, at least one of said active pixels comprising:

(a) a light sensing element formed in a semiconductor substrate;
(b) a transfer transistor formed between said light sensing element and a floating node and selectively operative to transfer a signal from said light sensing element to said floating node;
(c) an auxiliary capacitance connected to said floating node, said auxiliary capacitance being enabled when a level of illumination is above a threshold; and
(d) an amplification transistor controlled by said floating node;

a processing circuit for receiving the output of said active pixels; and

an I/O circuit for outputting the output of said active pixels off of said CMOS image sensor.

23. The image sensor of Claim 22 wherein said light sensing element is selected from the group of photodiode, pinned photodiode, partially pinned photodiode, or photogate.

24. The image sensor of Claim 22 further wherein if said level of illumination is below said threshold, said auxiliary capacitance is disabled.

25. The image sensor of Claim 22 further including a reset transistor operative to reset said floating node to a reference voltage.

**EP 1 657 911 A2**

**26.** The image sensor of Claim 22 wherein said auxiliary capacitance is a transistor.

# FIGURE 1

# FIGURE 2

MONITOR
ILLUMINATION LEVEL
301

HIGHER THAN
THRESHOLD
?
303

NO → OPERATE IN
NORMAL 4T
MANNER
305

YES

TURN ON AUXILIARY
MOS TRANSISTOR
AND OPERATE IN 4T
MANNER
307

# FIGURE 3

SENSOR
ARRAY
<u>1103</u>

MEMORY
<u>1109</u>

111

PROCESSING
CIRCUIT
<u>1105</u>

I/O
<u>1107</u>

1101

# FIGURE 4